Europäisches Patentamt

European Patent Office

Office européen des brevets

(19)

(11) Publication number: **0 208 360**
**A2**

(12) ## EUROPEAN PATENT APPLICATION

(21) Application number: 86201046.9

(22) Date of filing: 17.06.86

(51) Int. Cl.⁴ **B64C 17/00** , B64C 21/00 , B64C 13/00

(30) Priority: 08.07.85 SE 8503374

(43) Date of publication of application:
14.01.87 Bulletin 87/03

(84) Designated Contracting States:
CH DE FR GB IT LI

(71) Applicant: SAAB-SCANIA AKTIEBOLAG
Fack
S-581 88 Linköping(SE)

(72) Inventor: Karling, Krister
M/C 202 15 McDonnel Douglas Corp.
3855 Lakewood Blvd. Long Beach CA
90801(US)

(74) Representative: Rustner, Lars
SAAB-SCANIA AB Patent Department
S-581 88 Linköping(SE)

(54) A device for yaw steering of aircraft.

(57) A device for control in yaw of an aircraft with a slender nose, especially for supersonic speed at high angles of attack, at speeds especially up to Mach 0.5, distinguished in that ports are arranged in both sides of the nose portion of the aircraft, spaced from its plane of symmetry, with the ports so arranged with controllably variable position in the two sides of the nose portion that at least one port in one side, standing in flow connection with at least one port in the other side, causes such an asymmetrical discharge of body nose air vortices from the sides that by reason of the thus-arising pressure difference between the two sides a controllable yaw moment is obtained.

EP 0 208 360 A2

## A device for yaw steering of aircraft

The present invention relates to a device for yaw control of an aircraft with a slender nose at high angle of attack and speeds especially up to Mach 0.5. The nose can be pointed or more or less rounded. In the flight of such aircraft, such as airplanes and guided missiles, with high angle of attack, that is, angle between the longitudinal symmetry axis of the aircraft and the existing wind vector, in the range of 20° -80°, most notably 35° - 70°, a problem arises in controlling the aircraft in yaw, that is, to impose upon the aircraft a controlling yaw moment about an axis at right angles to its longitudinal symmetry axis in its plane of symmetry. The reason is that the body and supporting surfaces of the aircraft increasingly with increasing angles of attack are located between the wind vector and the active control surfaces of the aircraft, that is, the rudder. Under these conditions, even a large rudder angle $\delta_r$ will become more or less ineffective. Especially for modern fighter airplanes with a large requirement for maneuverability there has been presented for a long time a great need for a controllable steering means effective even at large angles of attack. The object of the invention is thus to provide a simple, reliable device for yaw control of an aircraft with a slender nose at high angles of attack and speeds especially up to Mach 0.5. Such a device is characterized according to the invention in that ports are arranged at both sides of the nose portion of the aircraft, separated from the mentioned plane of symmetry, which ports are so arranged, in controllably variable positions on both sides of the nose portion that at least one port on one side, communicated for flow with at least one port on the other side, produces such an asymmetrical departure of body nose air vortices from the sides that by reason of the pressure difference between the sides thus arising a controllable yaw moment is obtained. In one embodiment of the invention the ports are arranged with continuously controllably variable positions. This can be obtained if, for example the ports are arranged in a part of the nose portion that is rotatable about an axis parallel with the longitudinal axis of symmetry of the nose portion. This can be most simply carried out if the nose portion in the immediate vicinity has a circular cross-section. In and of itself the cross-section need not be circular in order for a part of the nose portion to be rotatable or the ports movable, but that provides the simplest construction.

In an alternative embodiment the ports are arranged with stepwise controllably variable positions, for example, by having several ports arranged in each of the two sides of the nose portion, selectably connectable with one another. In this the ports in one side of the nose portion are connected with the ports in the other side by means of passages provided with controllable closure means such as flaps. The ports themselves can take various forms, but circular ports or ports in the form of elongated slots, with their longitudinal axis parallel to the longitudinal axis of the nose portion, would seem to be suitable. It is suitable to provide the ports with controllable closures, so that the drag during flight at high speeds is eliminated by keeping the ports closed in such flying to the extent that the device according to the invention need not be made use of for active yaw control.

The invention is more particularly described with reference to the accompanying drawings, wherein:

Fig. 1 shows the relationship between rudder effect

$$C_{n_{\delta_r}}$$

and angle of attack $\alpha$;

Fig. 2 shows the relationship between yaw moment coefficient and attack coefficient:

-a effect of rudder,

-b effect of device according to the invention;

Fig. 3 is a cross-section of a device according to the invention;

Fig. 4 is a side view of a device according to the invention;

Figs. 5 and 6 are cross-section views of the device according to the invention, in operation;

Figs. 7a and 7b show an alternative device according to the invention partly without active controlling effect and partly active with controlled effect;

Fig. 8 shows the device of Figs. 7a and 7b seen from the side;

Fig. 9 shows a further alternative device according to the invention, seen in cross-section;

Fig. 10 shows the device of Fig. 9, seen from the side; and

Fig. 11 shows the relationship between the yawing moment coefficient $C_n$ and the angle of attack $\alpha$ with the employment of a device according to the invention.

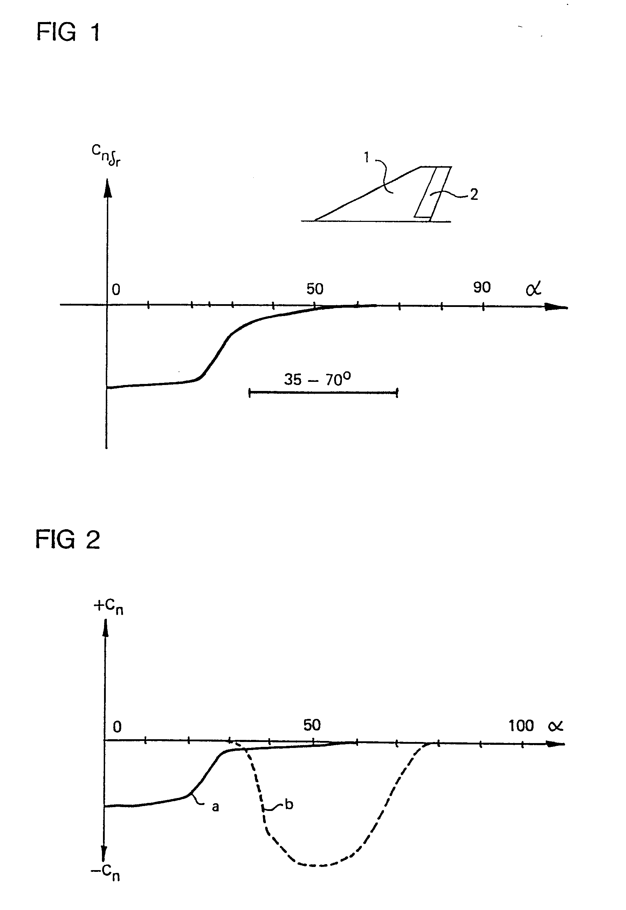

In Fig. 1 is shown how the rudder effect for an aircraft, in this case an airplne with a fin 1 provided with a rudder 2, varies with increasing angle of attack $\alpha$. In the figure the range 35° -70° is marked. Within that range occur unctrolled flow conditions about a slender nose on an aircraft which make themselves known by asymmetrical discharge of air vortices from both sides of the nose portion, spaced from the plane of symmetry. In the diagram the rudder effect is given by

$$C_{n_{\delta r}}$$

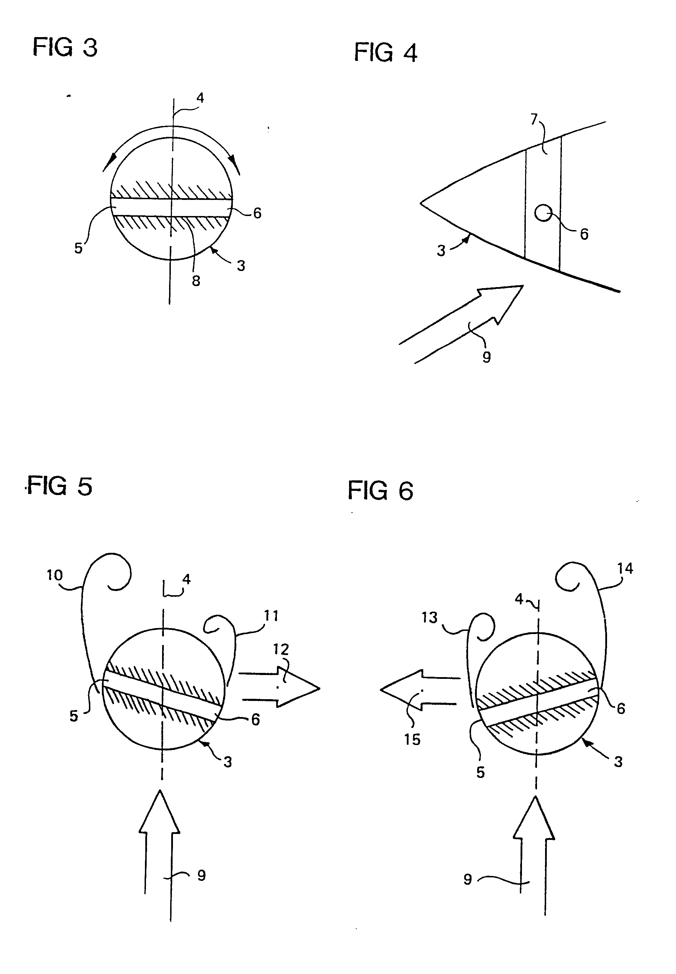

, which is defined as the de rivative of $C_n$ with respect to $\delta_r$, that is, the slope of a curve in a diagram $C_n$ as a function of $\delta_r$. $C_n$ is the yawing moment coefficient and is defined as "yaw moment (moment about an axis at right angles to the axis of longitudinal symmetry of the aircraft in its plane of symmetry)/dynamic pressure x wind area x wing span." As appears from the figure, the rudder effect, even at $\alpha = 40°$ is very weak, and over 60° has totally ceased. In Fig. 2 is illustrated, by curve a, how the yawing moment Cn produced by a rudder diminishes with increasing $\alpha$, and by curve b the values of $C_n$ that can be produced with a device according to the invention for angles of attack in the range of 35° to about 70°. The device, the effect of which is shown in Fig. 2, is shown in cross-section in Fig. 3 and from the side in Fig. 4. An aircraft's nose portion is designated by 3 and its plane of symmetry by 4. In the nose portion 3 two ports 5, 6 are arranged symmetrically in a part 7 which is rotatable in relation to the rest of the nose portion around its longitudinal axis of symmetry. The cross-section of the nose portion is circular at this part.

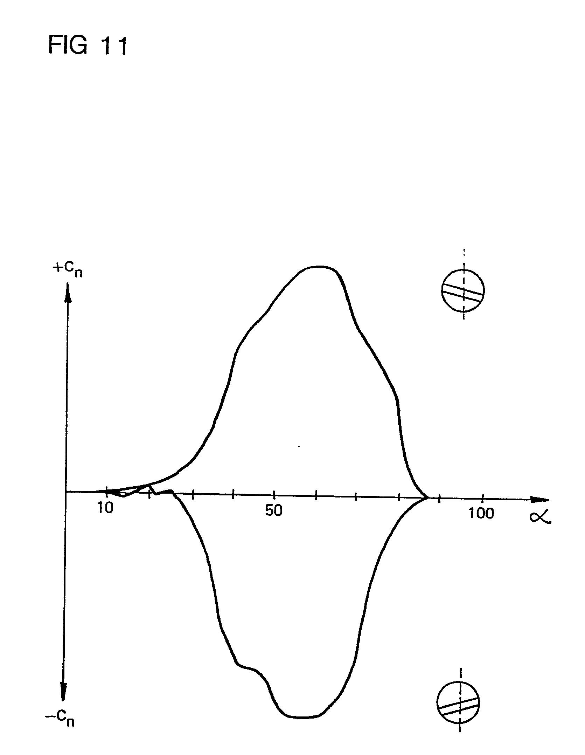

The ports 5 and 6 are connected by a passage 8 that admits a flow of air. The prevailing wind vector is designated by 9. In Fig. 3 the device according to the invention occupies a neutral position, which means that it does not exert any active controlling force beyond its effect of equalizing possible stochastically arising asymmetric flow conditions that arise within the range $\alpha = 20°$ - 80°, most notably 35° -70°, which is marked in Fig. 1. If, however, the device is turned as in Fig. 5, there is actively produced an asymmetrical flow relationship around the nose portion 3, so that through the asymmetry of the discharge of air vortices 10 and 11 from the nose portion 3, a side force 12 arises which produces a controlling yaw moment. In Fig. 6 is shown how a corresponding right-hand rotation of the device according to the invention produces corresponding asymmetrical air vortices 13, 14 and a side force 15 arising therefrom that has an opposite direction compared with the side force 12. In Fig. 11 is shown, in the upper half of the diagram, the yaw moment that is produced by the mention left-hand rotation of the device, as a function of the angle of attack $\alpha$, and in the lower half of the diagram the corresponding effect of a right-hand rotation of the device.

The device shown in Fig. 3 and 4 is continuously rotatable, which means that a desired yaw moment for a certain angle of attack can be obtained through a corresponding rotation of the device about its longitudinal axis.

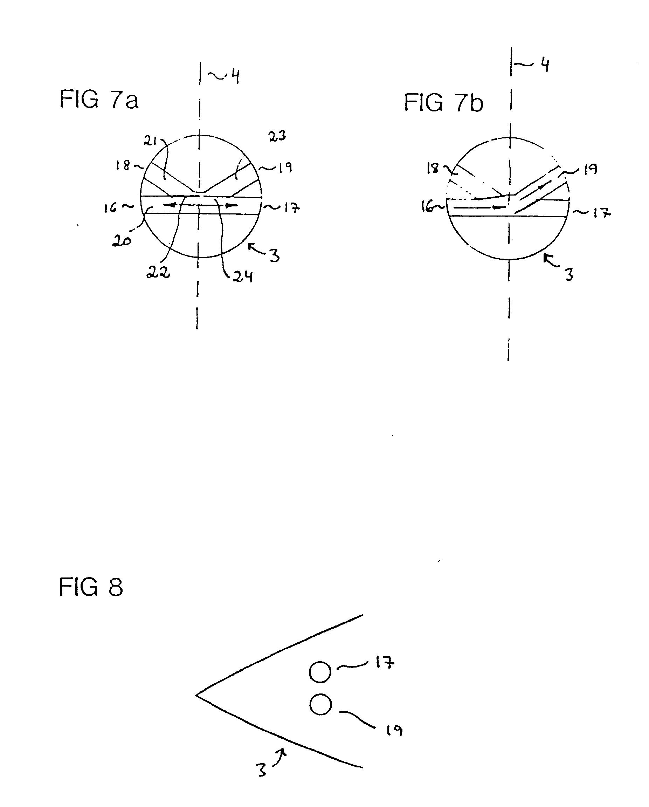

In Figs. 7a, 7b and 8 is shown an alternative embodi ment of a device according to the invention particularly for stepwise controllable variation of the positions of the parts. The illustrated arrangement presents two ports 16, 18 in one side of the nose portion and two ports 17, 19 in its other side. Ports 16 and 17 are connected with one another by means of a straight passage 20, which is arranged at right angles to the longitudinal axis of symmetry of the nose portion. From the port 18 a passage 21 leads inward to the center of the nose portion and connects with the passage 20. At the connection there is arranged a controllable flap means 22. In a corresponding manner a passage 23 leads to a connection location in the passage 20, with a controllable flap means 24 arranged in the connection location. As can be understood from the figure, the flap means 22, 23 can be selectably set so that connection is obtained between the ports 16, 17 - (neutral position), 18, 17 (left-hand turning) or 16, 19 (right-hand turning). Through this positioning of the device there is brought about such asymmetry in the discharge of air vortices from the nose portion that controlling yaw moments to the left or right are obtained.

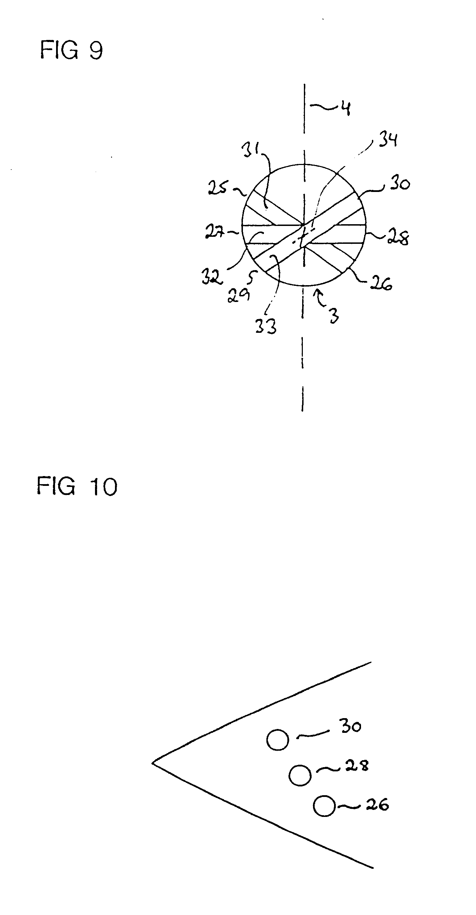

In Figs. 9 and 10 is shown a further embodiment of a device according to the invention for stepwise controllable variation of the positions of the ports. In one side of the nose portion are arranged three ports 25, 27, 29, and in the other side three ports 26, 28, 30. The ports are connected in pairs by straight passages 31, 32 and 33, so that the ports 25, 26 are connected by the passage 31, the ports 27, 28 by the passage 32, and ports 29, 30 by the passage 33.

In the passages are arranged controllable shut-off flaps, of which only the shut-off flap 34 in the passage 33 is shown. By controlling the shut-off flaps there is obtained the desired asymmetry in the discharge of air vortices through which the desired controlling yaw moment is obtained.

## Claims

1. Device for an aircraft, particularly for supersonic speed, comprising a central elongated body with a nose, wherein the relationship between the length of the nose and its width is greater than 1.5 and the aircraft is substantially symmetrical to a symmetry plane, for control in yaw, that is, about an axis at right angles to the longitudinal symmetry axis of the body in said symmetry plane, at high angles of attack $\alpha$, that is, the angle between the longitudinal symmetry axis of the body and the prevailing wind vector, at speeds especially up to Mach 0.5, characterized in that ports are arranged in both sides of the nose portion of the body, spaced from the symmetry plane, which ports are so arranged with controllably variable positions at the two sides of the nose portion that at least one port at one side, connected with at least one port at the other side, causes such an aymmetrical discharge of body nose air vortices from the sides that by reason of the pressure difference thus arising between the two sides a controllable yaw moment is obtained.

2. Device according to claim 1, characterized in that the ports are arranged with continuously controllable variable positions.

3. Device according to claim 2, characterized in that the ports are arranged in a part of the nose portion that is rotatable about an axis parallel to the longitudinal symmetry axis of the nose portion.

4. Device according to claim 1, characterized in that the ports are arranged with stepwise controllably variable positions.

5. Device according to claim 4, characterized in that a plurality of ports are arranged in each of the two sides of the nose portion, selectably communicable with one another.

6. Device according to claim 4 or 5, characterized in that ports in one side of the nose portion are communicated with ports in the other side by means of passages provided with controllable closure means.

7. Device according to any of the preceding claims, characterized in that the ports are circular.

8. Device according to any of the preceding claims, characterized in that the ports are provided with controllable closures.

FIG 1

$C_{n\delta_r}$

0    50    90    $\alpha$

1
2

35 − 70°

FIG 2

$+C_n$

0    50    100    $\alpha$

a
b

$-C_n$

FIG 3

FIG 4

FIG 5

FIG 6

FIG 7a

FIG 7b

FIG 8

FIG 9

FIG 10

FIG 11